# FASCICULE DE BREVET EUROPEEN

(11) **EP 3 754 506 B1**
(45) Date de publication et mention de la délivrance du brevet: **22.11.2023**
(21) Numéro de dépôt: 20180274.1
(22) Date de dépôt: 16.06.2020
(51) Int. Cl.: G06F 11/36

(54) **PROCÉDÉ DE VALIDATION AUTOMATIQUE DE COTS ET DISPOSITIF POUR LA MISE EN OEUVRE DU PROCÉDÉ**
VERFARHREN UND SYSTEM ZUR AUTOMATISCHEN VALIDIERUNG VON COTS
METHOD AND SYSTEM FOR AUTOMATIC VALIDATION OF COTS

(30) Priorité: 20.06.2019 FR 1906638
(43) Date de publication de la demande: 23.12.2020
(73) Titulaire: THALES, 92190 Meudon (FR)
(72) Inventeur: KAAKAI, Fateh, 94628 Rungis (FR); PESQUET, Béatrice, 94628 Rungis (FR)
(74) Mandataire: Atout PI Laplace

(56) Documents cités:
- US-A1- 2016 239 401
- Vinh Phuc Nguyen: "The application of machine learning methods in software verification and validation", , 31 août 2010 (2010-08-31), pages 1-37, XP055673888, The University of Texas at Austin Extrait de l'Internet: URL:https://repositories.lib.utexas.edu/bi tstream/handle/2152/ETD-UT-2010-08-1605/PH UC-MASTERS-REPORT.pdf?sequence=1&isAllowed =y [extrait le 2020-03-05]
- Manish Pandey: "Machine Learning in Formal Verification FMCAD 2016 Tutorial", , 1 janvier 2016 (2016-01-01), XP055673893, Extrait de l'Internet: URL:https://www.cs.utexas.edu/users/hunt/F MCAD/FMCAD16/slides/tutorial1.pdf [extrait le 2020-03-05]

## Description

L'invention se situe dans le domaine général des systèmes d'information. Elle se rapporte plus particulièrement à la validation de composants, d'équipements, de produits, de systèmes d'information, et des applications logicielles utilisant des produits logiciels sur étagères ou des logiciels libres.

Un produit informatique standard (logiciel ou matériel), aussi nommé 'produit informatique COTS' (sigle emprunté à l'expression d'origine anglaise "commercial off-the-shelf") désigne tout produit informatique fabriqué en série et vendu en grande distribution pour répondre à des besoins spécifiques de plusieurs utilisateurs qui peuvent l'utiliser de façon autonome. Les produits informatiques standards sont de plus en plus utilisés dans les systèmes industriels en raison de leurs faibles coûts de conception, de fabrication, et de maintenance.

Un logiciel standard (aussi nommé `logiciel commercial sur étagère') est un logiciel conçu par le titulaire du marché ou un éditeur tiers, existant en de multiples copies, dont le code source peut être disponible, vendu, loué, fourni gratuitement par un vendeur (par exemple les logiciels libres), ou inconnu. Les logiciels standards sont destinés à être incorporés en tant que pièces détachées dans des systèmes hôtes tels que les systèmes d'informations et les applications logicielles. Des exemples de logiciels standards comprennent les composants d'extension (par exemples les plugins, les codées, les pilotes, etc.), les bibliothèques logicielles, les exécutables, les fichiers, les composants de données (par exemples les bases de données et les ontologies), et les éléments de configuration tels que les paramètres, les scripts, et les fichiers de commandes.

L'intégration de logiciels standards permet de bénéficier de logiciels récents et évolutifs à faible coût, opérationnels dans les meilleurs délais, et réutilisables sur d'autres systèmes spécifiques.

En informatique, un test de validation désigne un test informatique qui permet de vérifier si un logiciel respecte toutes les exigences client décrites dans le document de spécifications du logiciel. L'objectif principal d'un test de validation est de rechercher des informations quant à la qualité du système et d'identifier un nombre de comportements problématiques du logiciel testé afin de permettre la prise de décisions.

Les tests de validation sont réalisés en plusieurs phases, en validation fonctionnelle, validation solution, et validation de performance et de robustesse. Les tests fonctionnels assurent que les divers modules ou composants implémentent correctement les exigences client. Les tests de validation solution assurent que les exigences client sont respectées d'un point de vue « cas d'utilisation ». Les tests de performances vérifient la conformité de la solution par rapport à des exigences de performance, et les tests de robustesse permettent d'identifier des éventuels problèmes de stabilité et de fiabilité dans le temps.

La classification des tests informatiques peut se baser sur la nature de l'objet à tester, ou sur l'accessibilité de la structure de l'objet, ou encore sur la propriété de l'objet. Selon la nature de l'objet testé, quatre niveaux de tests existent: des tests de composants (ou tests unitaires), des tests d'intégration, des tests systèmes, et des tests d'acceptation. Selon l'accessibilité de la structure de l'objet, trois techniques de tests de validation existent: les tests en mode 'boîte blanche', les tests en mode 'boîte grise', et les tests en mode 'boîte noire'.

Les tests en mode boîte blanche, qui sont en général des tests fonctionnels, permettent de vérifier la structure interne d'un composant ou d'un système. L'objet testé répond à un besoin exprimé. Ses interfaces sont spécifiées et son contenu devient la propriété de l'intégrateur de l'objet dans le système hôte. L'objet testé devient partie intégrante du système hôte avec la possibilité d'adapter ses stratégies de validation, le transfert d'une partie du savoir-faire du développeur (ou fournisseur) vers l'intégrateur, et l'adaptation de l'objet au besoin du système spécifique. Pour certains types de logiciels, des techniques de conception de tests en mode boîte blanche sont prescrites par des normes (par exemple les normes RTCA/DO-178C/DO-278C ou EUCOCAE ED-12C/ED-109A pour le secteur aéronautique).

Les tests en mode boîte grise permettent de tester un objet qui répond à un besoin exprimé, dont les interfaces sont spécifiées et le contenu est partiellement connu. Certaines données de développement deviennent la propriété de l'intégrateur du système hôte avec la visibilité du code source et de certaines documentations techniques (spécifications) et des tests du fournisseur.

Les tests en mode boîte noire, fonctionnels ou non-fonctionnels, permettent de vérifier la définition de l'objet testé en vérifiant que les sorties obtenues sont bien celles prévues pour des entrées données, l'objet testé ayant des interfaces spécifiées mais un contenu inconnu.

La validation des logiciels standards et des logiciels libres se base souvent sur des techniques de tests en mode boîte noire à cause de l'effet boîte noire qui les caractérise vu l'absence ou l'obsolescence de leur spécification, de documents d'architecture et de conception, et de preuves formalisées de test. Les stratégies de validation des logiciels standards et des logiciels libres dépendent aussi de la maîtrise des interactions entre les logiciels intégrés et le système hôte et sont influencées par le domaine d'application, les défaillances des éléments matériels et logiciels du système hôte, de la validation du système hôte, ainsi que de l'évolution des logiciels testés.

La demande de brevet américains publiée sous le numéro US 2016/239401 décrit une méthode pour la caractérisation du fonctionnement d'un composant sous test à partir d'un ensemble de données. La caractérisation du fonctionnement du composant selon D1 se base sur la détermination d'une relation entre des données d'entrée et de sortie connues et la génération d'un modèle paramétrique à partir de l'ensemble de données pour la détermination automatique d'une fonctionnalité du composant.

Les techniques de validation et de qualification des logiciels standards et des logiciels libres dépendent de l'accès de l'intégrateur (propriétaire du système hôte) aux spécifications de ces logiciels. Dans le cas où la spécification existe et est suffisamment précise, l'intégrateur teste et valide le logiciel dans son contexte d'utilisation en exécutant un ou plusieurs tests préalablement élaborés pour vérifier le respect d'une ou plusieurs exigences spécifiques et envoie les défauts constatés à l'éditeur du logiciel testé. Dans le cas où la spécification est inconnue ou très incomplète ou obsolète, la validation du logiciel doit se faire en mode boîte noire, ce qui peut être contraire à certaines contraintes de certification qui exigent de vérifier la conception interne du composant logiciel testé.

A cet effet, l'invention a pour objet un procédé de test et validation automatique de logiciels standards et de logiciels libres permettant de tester, valider, vérifier, et qualifier, de manière automatique, le fonctionnement d'un logiciel standard ou d'un logiciel libre. Plus précisément, l'invention fournit un procédé pour tester un composant logiciel implémenté dans un système hôte à partir d'une ou plusieurs campagnes de test, une campagne de test comprenant des cas de tests informatiques et étant associée à des données de test d'entrée. Le procédé est caractérisé en ce qu'il comprend les étapes consistant à :
- exécuter les cas de tests informatiques de chaque campagne de tests pendant une période de fonctionnement du composant logiciel, ce qui fournit des données de test de sortie associées à chaque campagne de tests;
- déterminer un modèle de fonctionnement de référence et une partition de données à partir des données de test d'entrée et de sortie associées à chaque campagne de test, un modèle de fonctionnement de référence étant déterminé en appliquant un algorithme d'apprentissage machine aux données de test d'entrée et de sortie, une partition de données étant déterminée en appliquant un algorithme de partitionnement de données aux données de test d'entrée et de sortie;
- fonctionner le composant logiciel en utilisant des données de mise en production d'entrée, ce qui fournit des données de mise en production de sortie;
- déterminer une caractéristique de fonctionnement du composant logiciel à partir des modèles de fonctionnement de référence en fonction d'une comparaison entre les données de mise en production d'entrée et de sortie et les données des partitions de données associées à la une ou plusieurs campagnes de test.

Selon certains modes de réalisation, algorithme d'apprentissage machine peut être un algorithme d'apprentissage machine choisi dans un groupe comprenant des algorithmes d'apprentissage machine de type clustering non-supervisés.

Selon certains modes de réalisation, l'algorithme d'apprentissage machine peut être un réseau de neurones profond.

Selon certains modes de réalisation, l'algorithme de partitionnement de données peut être choisi dans un groupe comprenant, sans limitation, l'algorithme des k-moyennes, des algorithmes de regroupement hiérarchique, et des algorithmes de maximisation de l'espérance.

Selon certains modes de réalisation, l'ensemble des partitions de données associées à la une ou plusieurs campagnes de test peut correspondre à un domaine d'usage du composant logiciel, les données de mise en production d'entrée et les données de mise en production de sortie étant représentées par un point de fonctionnement du composant logiciel. L'étape de détermination d'une caractéristique de fonctionnement du composant logiciel peut, selon ces modes de réalisation, comprendre la détermination si ledit point de fonctionnement appartient au domaine d'usage et à une partition de donnée.

Selon certains modes de réalisation, le domaine d'usage peut comprendre au moins une zone de défaillance, la caractéristique de fonctionnement pouvant être une anomalie de fonctionnement du composant logiciel si le point de fonctionnement est compris dans l'au moins une zone de défaillance ou si le point de fonctionnement n'appartient pas au domaine d'usage du composant logiciel.

Selon certains modes de réalisation, la caractéristique de fonctionnement peut être une nouvelle fonctionnalité du composant logiciel si le point de fonctionnement appartient au domaine d'usage et n'appartient à aucune des une ou plusieurs partitions de données et à aucune de l'au moins une zone de défaillance.

Selon certains modes de réalisation, chaque partition de données et chaque modèle de fonctionnement associés à chaque campagne de test peuvent correspondre à une fonctionnalité donnée du composant logiciel, la caractéristique de fonctionnement étant la fonctionnalité donnée si le point de fonctionnement appartient à la partition de données correspondant à la fonctionnalité donnée.

Selon certains modes de réalisation, les cas de tests informatiques peuvent être définis en fonction de l'application du système hôte.

L'invention fournit en outre un dispositif pour tester un composant logiciel implémenté dans un système hôte à partir d'une ou plusieurs campagnes de tests, une campagne de test comprenant des cas de tests informatiques et étant associée à des données de test d'entrée. Le dispositif est caractérisé en ce qu'il comprend :
- une unité de traitement configurée pour :
   * exécuter les cas de tests informatiques de chaque campagne de tests pendant une période de fonctionnement du composant logiciel, ce qui fournit des données de test de sortie associées à chaque campagne de tests, et
   * déterminer un modèle de fonctionnement de référence et une partition de données à partir des données de test d'entrée et de sortie associées à chaque campagne de test, un modèle de fonctionnement de référence étant déterminé en appliquant un algorithme d'apprentissage machine aux données de test d'entrée et de sortie, une partition de données étant déterminée en appliquant un algorithme de partitionnement de données aux données de test d'entrée et de sortie;
- une unité de test configurée pour :
   * fonctionner le composant logiciel en utilisant des données de mise en production d'entrée, ce qui fournit des données de mise en production de sortie;
   * déterminer une caractéristique de fonctionnement du composant logiciel à partir des modèles de fonctionnement de référence en fonction d'une comparaison entre les données de mise en production d'entrée et de sortie et les données des partitions de données associées à la une ou plusieurs campagnes de test.

Avantageusement, les modes de réalisation de l'invention permettent de tester d'une manière automatique le fonctionnement d'un composant logiciel.

Avantageusement, les modes de réalisation de l'invention permettent de détecter si le composant logiciel testé sort du domaine d'usage qualifié et de détecter des éventuelles anomalies.

Avantageusement, les modes de réalisation de l'invention fournissent des tests automatiques de composants logiciels basés sur des techniques d'intelligence artificielle et d'analyse de données pour des tests en mode boîte noire.

Les dessins annexes illustrent l'invention:
[Fig.1] représente une vue schématique d'un système hôte implémentant un dispositif de test de composant logiciel, selon certaines modes de réalisation de l'invention.
[Fig.2] représente un organigramme illustrant un procédé pour tester un composant logiciel implémenté dans un système hôte, selon certains modes de réalisation de l'invention.
[Fig.3] représente un organigramme illustrant une étape de détermination d'une caractéristique de fonctionnement d'un composant logiciel, selon certains modes de réalisation de l'invention.
[Fig.4] représente des points de fonctionnement d'un composant logiciel dans un domaine d'usage, selon certains modes de réalisation de l'invention.
[Fig.5] représente une vue schématique d'un système hôte exemplaire pour l'implémentation de dispositif de test de composant logiciel, selon certains modes de réalisation de l'invention.

Les modes de réalisation de l'invention fournissent un procédé et un dispositif pour tester, d'une manière automatique, un composant logiciel implémenté dans un système hôte à partir d'une ou plusieurs campagnes de tests.

Le procédé et le dispositif selon l'invention peuvent être utilisés pour la validation de tout type de composants, d'équipements, de produits, de systèmes informatiques, systèmes d'information, et d'applications logicielles implémentant un composant logiciel à tester, le composant logiciel pouvant être un produit logiciel sur étagère (aussi nommé `logiciel standard') ou un logiciel libre.

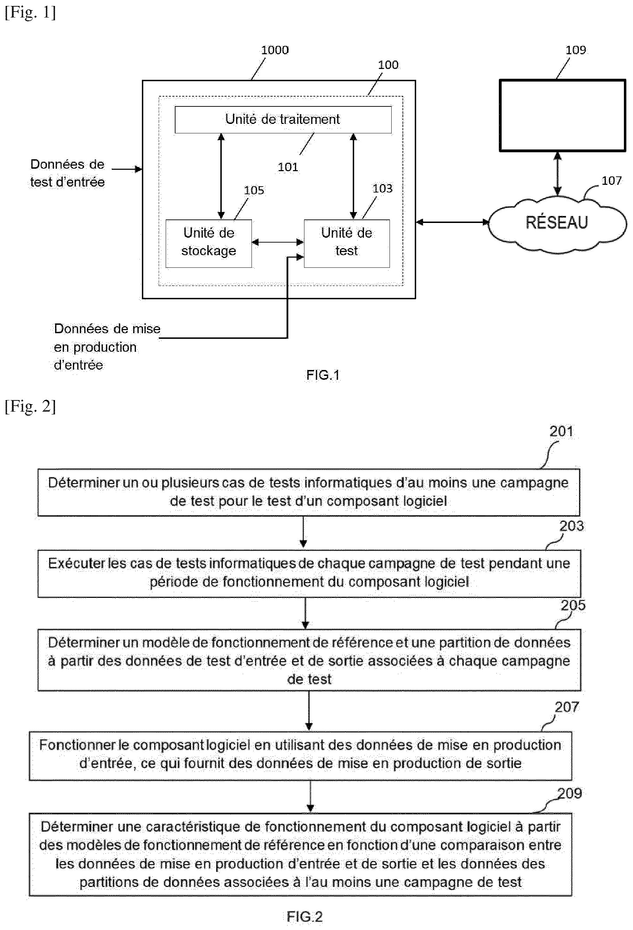

En référence à la figure 1, un environnement exemplaire d'un système hôte 1000 implémentant un composant logiciel à tester est illustré, selon certains modes de réalisation de l'invention.

Le système hôte 1000 pour représenter tout type de système d'information dédié à la collecte, le stockage, la structuration, la modélisation, la gestion, l'analyse, le traitement, et la distribution de données (textes, images, sons, vidéo).

Selon certains modes de réalisation, le système hôte 1000 peut comprendre des ressources informatiques telles que les fichiers de données, les bases de données et systèmes de gestion de bases de données, les progiciels de gestion intégrés, les outils de gestion des clients, des outils de gestion de la chaîne logistique, des outils de travail collaboratif, des applications métier, des serveurs d'application ou de présentation (Web), des architectures d'intégration, et les infrastructures réseaux.

Selon certains modes de réalisation, le système hôte 1000 peut être un dispositif informatique personnel, une tablette informatique, un terminal client, un téléphone portable, ou tout dispositif informatique de ce type implémentant un composant logiciel. Le système hôte 1000 peut être utilisé dans divers systèmes ou dispositifs industriels embarqués tels que les satellites et les dispositifs médicaux.

Référant à la figure 1, le système hôte 1000 peut échanger ou communiquer ou diffuser des données à un système 109 via un réseau de communication 107.

Dans certains modes de réalisation, le système 109 peut être un autre système d'information échangeant des données avec le système hôte 1000 à travers une ou plusieurs interfaces de programmation applicatives.

Dans certains modes de réalisation utilisant une architecture client/serveur, le système hôte 1000 peut représenter un dispositif informatique client échangeant des données avec un système informatique de serveur 109 fournisseur de données, via le réseau de communication 107.

Dans certains modes de réalisation, le système 109 peut être un serveur fournisseur de services informatiques en nuage ('cloud computing' en anglais) à au moins un système hôte 1000. Selon ces modes de réalisation, les services informatiques peuvent être de type `logiciels en tant que service' ('software as a service' en anglais), 'plate-forme en tant que service' (`platform as a service' en anglais), ou 'infrastructure en tant que service' ('infrastructure as a service' en anglais).

Selon les services informatiques de type logiciel en tant que service, les logiciels exploités par le système hôte 1000 peuvent être installés sur le serveur distant 109. Ces logiciels peuvent comprendre, à titre d'exemples, des applications de gestion de la relation client, des applications de visioconférence, des applications de messagerie et de logiciels collaboratifs, et des applications de création de site e-commerce.

Selon les services informatiques de type plate-forme en tant que service, le système hôte 1000 peut être configuré pour maintenir les applications et le serveur 109 peut être configuré pour maintenir la plate-forme d'exécution de ces applications. La plate-forme d'exécution des applications clients peut comprendre, sans limitation, du matériel ou des serveurs de stockage (par exemple la carte mère et sa mémoire vive), les logiciels de base comprenant le(s) système(s) d'exploitation et le(s) moteur(s) de base de données, et l'infrastructure de connexion au réseau, de stockage et de sauvegarde.

Selon les services informatiques de type infrastructure en tant que service, le système hôte 1000 peut être configuré pour gérer les logiciels applicatifs (par exemples les exécutables, les paramétrages, et les bases de données) et le serveur 109 peut être configuré pour gérer le matériel serveur, les couches de virtualisation ou de conteneurisation, le stockage, et les réseaux.

Selon certains modes de réalisation, le réseau de communication 107 peut inclure un ou plusieurs réseaux privés et/ou publics qui permettent au système hôte 1000 d'échanger des données avec le système 109, tels qu'Internet, un réseau local (LAN), un réseau étendu (WAN) un réseau de voix/données cellulaire, une ou plusieurs connexions de bus à grande vitesse et/ou d'autres types de réseaux de communications (filaires, sans fil, radio).

Les modes de réalisation de l'invention fournissent un dispositif et un procédé pour le test d'un composant logiciel de type logiciel standard ou logiciel libre implémenté dans le système hôte 1000 à partir d'une ou plusieurs campagnes de test.

Selon certains modes de réalisation, le composant logiciel testé peut être, à titre d'exemple et sans limitation, un composant logiciel choisi parmi un groupe comprenant des composants d'extension (par exemples les plugins, les codecs, et les pilotes), des bibliothèques logicielles, des exécutables, des fichiers, des composants de données (par exemples des bases de données et des ontologies), et des éléments de configuration tels que les paramètres, les scripts, et les fichiers de commandes.

Une campagne de test comprend un ensemble de cas de tests informatiques à exécuter sur une période de temps donnée pour répondre à un besoin spécifique. Un cas de test informatique est un test qui sert à vérifier si certaines données de test d'entrée pour une exécution donnée produisent le résultat attendu. Le besoin peut être de vérifier que le comportement du composant logiciel testé est toujours le même après des mises à jour logicielles, de vérifier le comportement d'une nouvelle fonctionnalité à implémenter, de s'assurer que l'ajout de nouvelles fonctionnalités n'a pas introduit de régression sur les anciennes, ou de s'assurer que le changement de serveur ou de base de données n'a pas impacté le service.

Selon certains modes de réalisation, la période de temps donnée pour exécuter les cas de tests d'une campagne de test peut être quelques minutes ou dizaines de minutes, quelques jours, ou parfois quelques semaines.

Selon certains modes de réalisation, une campagne de test peut être une campagne de test de validation visant à vérifier que le composant logiciel a bien le comportement attendu, ou une campagne de régression visant à vérifier que l'implémentation de nouvelles fonctionnalités n'a pas impacté le comportement des fonctionnalités déjà présentes dans le composant, ou bien une campagne de test vitaux visant à s'assurer que l'intégration du composant logiciel dans le système hôte 1000 n'a pas engendré de régression critique sur l'application.

En référence à la figure 1, un dispositif 100 pour tester un composant logiciel implémenté dans le système hôte 1000 à partir d'une ou plusieurs campagnes de test, est illustré. Chaque campagne de test désignée Cᵢ est associée à un ensemble de données de test d'entrée notées Eⁱ₁, Eⁱ₂,...,Eⁱ_{N}, l'ensemble de données de test d'entrée comprenant N valeurs de test d'entrée et l'indice i variant de 1 au nombre total Nₜₒₜ de campagnes de test considérées, au moins égal à 1. Le test du composant logiciel se base sur la détermination d'un ou plusieurs modèles de fonctionnement de référence du composant logiciel pendant une phase d'apprentissage suivie d'une phase de mise en production pendant laquelle le fonctionnement du composant logiciel en mode opérationnel est comparé aux différents modèles de fonctionnement de référence, ce qui permet de déterminer une caractéristique de fonctionnement du composant logiciel et de détecter toutes anomalies et nouvelles fonctionnalités du composant logiciel.

Selon certains mode de réalisation, le dispositif 100 peut comprendre une unité de traitement 101 configurée pour exécuter les cas de test informatiques de chaque campagne de test Cᵢ pendant une période de fonctionnement du composant logiciel. La période de fonctionnement peut correspondre à l'ensemble des périodes de temps données nécessaires pour exécuter les cas de tests de chacune des campagnes de test considérées. L'exécution des cas de tests informatiques de chaque campagne de test Cᵢ fournit des données de test de sortie notées Sⁱ₁, Sⁱ₂,...,Sⁱ_{N} associées à chaque campagne de test Cᵢ.

L'unité de traitement 101 peut être configurée pour analyser et traiter les données de test d'entrée Eⁱ₁, E¹₂,...,Eⁱ_{N} et les données de test de sortie associées Sⁱ₁, Sⁱ₂,...,Sⁱ_{N} à chaque campagne de test Cᵢ pour i variant de 1 à Nₜₒₜ pour déterminer un modèle de fonctionnement de référence du composant logiciel et une partition de donnée, à partir des données de test d'entrée et des données de test de sortie associées à chaque campagne de test.

Plus précisément, l'unité de traitement 101 peut être configurée pour déterminer un modèle de fonctionnement de référence noté RTEMⁱ en association avec chaque campagne de test Cᵢ en appliquant un algorithme d'apprentissage machine aux données de test d'entrée Eⁱ₁, E¹₂,...,Eⁱ_{N} et données de test de sortie Sⁱ₁, Sⁱ₂,...,Sⁱ_{N} associées à la campagne de test Cᵢ. Les données de test d'entrée Eⁱ₁, E¹₂,...,Eⁱ_{N} et les données de test de sortie Sⁱ₁, Sⁱ₂,...,Sⁱ_{N} sont données comme couples à l'algorithme d'apprentissage machine qui va converger vers un état où ces paramètres internes permettent de reproduire et généraliser ces couples, en prenant les précautions de rigueur pour éviter les phénomènes d'under-fitting et over-fitting.

Selon certains modes de réalisation, l'algorithme d'apprentissage machine peut être un algorithme d'apprentissage machine choisi dans un groupe comprenant des algorithmes d'apprentissage machine de type clustering non-supervisés.

Dans un mode de réalisation préféré, l'algorithme d'apprentissage machine peut être un réseau de neurones profond.

L'unité de traitement 101 peut être configurée pour déterminer une partition de données notée P'en association avec chaque campagne de test Cᵢ en appliquant un algorithme de partitionnement de données (aussi nommé 'algorithme de groupement de données' ou encore `clustering algorithm' en anglais) aux données de test d'entrée Eⁱ₁, Eⁱ₂,...,Eⁱ_{N} et données de test de sortie Sⁱ₁, Sⁱ₂,...,Sⁱ_{N} associées à la campagne de test Cᵢ. Les données de test d'entrée Eⁱ₁, Eⁱ₂,...,Eⁱ_{N} et les données de test de sortie Sⁱ₁, Sⁱ₂,...,Sⁱ_{N} associées à chaque campagne de test Cᵢ, pour i variant de 1 à Nₜₒₜ, peuvent ainsi être représentées par des points de fonctionnement dans un espace multidimensionnel et peuvent être séparées ou groupées en différentes partitions (aussi nommées 'groupements' ou `clusters' en anglais).

Selon certains modes de réalisation, l'algorithme de partitionnement de données peut être choisi dans un groupe comprenant, sans limitation, l'algorithme des k-moyennes, des algorithmes de regroupement hiérarchique, et des algorithmes de maximisation de l'espérance.

Dans certains modes de réalisation, le dispositif 100 peut comprendre une unité de stockage configurée pour sauvegarder les modèles de fonctionnement de référence RTEMⁱ et les partitions de données P'déterminés par l'unité de traitement 101 pendant la phase d'apprentissage. Chaque partition de données P' et chaque modèle de fonctionnement de référence RTEMⁱ déterminés pour chaque campagne de test Cᵢ correspondent à une fonctionnalité donnée du composant logiciel testé. L'ensemble des partitions de données P' associées aux campagnes de test Cᵢ correspondent à un domaine d'usage D du composant logiciel aussi nommé domaine de qualification. Le domaine d'usage D représente le périmètre normal de fonctionnement du composant logiciel.

Dans certains modes de réalisation, le domaine d'usage D peut comprendre au moins une zone de défaillance.

Dans certains modes de réalisation, le nombre total de campagnes de test peut être choisi pour produire autant de modèles de fonctionnement de référence que nécessaires pour couvrir toutes les applications du composant logiciel testé. Les modèles de fonctionnement de référence constituent le comportement de référence désiré.

Dans certains modes de réalisation, le dispositif 100 peut comprendre une unité de test 103 configurée pour déterminer une caractéristique de fonctionnement du composant logiciel testé pendant une phase de mise en production, aussi nommée phase opérationnelle.

Plus précisément, l'unité de test 103 peut être configurée pour fonctionner ou mettre en production le composant logiciel testé en utilisant des données de mise en production d'entrée, ce qui fournit des données de mise en production de sortie. Les données de mise en production d'entrée et les données de mise en production de sortie peuvent être représentées par un point de fonctionnement du composant logiciel.

Une fois les données de mise en production d'entrée et les données de mise en production de sortie collectées, l'unité de test 103 peut être configurée pour déterminer une caractéristique de fonctionnement du composant logiciel à partir des modèles de fonctionnement de référence RTEM', pour i variant de 1 à Nₜₒₜ en fonction d'une comparaison entre les données de mise en production d'entrée et de sortie et les données des partitions de données P' associées aux campagnes de test Cᵢ. La comparaison du fonctionnement du composant logiciel dans le système en production par rapport aux modèles de fonctionnement de référence basés sur l'apprentissage permet, en production, de caractériser le fonctionnement du composant logiciel et de détecter tout fonctionnement nouveau ou anormal.

Selon certains mode de réalisation, l'unité de test 103 peut être configurée pour déterminer une caractéristique de fonctionnement du composant logiciel en déterminant si le point de fonctionnement représentant les données de mise en production d'entrée et les données de mise en production de sortie appartient au domaine d'usage D et à une partition de donnée P^{j} pour j pouvant varier entre 1 et Nₜₒₜ.

Plus précisément, l'unité de test 103 peut être configurée pour déterminer que la caractéristique de fonctionnement du composant logiciel est une anomalie de fonctionnement du composant logiciel, si le point de fonctionnement représentant les données de mise en production d'entrée et les données de mise en production de sortie est compris dans au moins une zone de défaillance comprise dans le domaine d'usage D ou si le point de fonctionnement n'appartient pas au domaine d'usage du composant logiciel. La détection d'une anomalie de fonctionnement permet d'initier une procédure de maintenance ou de réparation.

Dans certains modes de réalisation, l'unité de test 103 peut être configurée pour déterminer que la caractéristique de fonctionnement du composant logiciel est une nouvelle fonctionnalité du composant logiciel, si le point de fonctionnement représentant les données de mise en production d'entrée et les données de mise en production de sortie appartient domaine d'usage et n'appartient à aucune des partitions de données Pⁱ pour i allant de 1 à Nₜₒₜ, et n'appartient à aucune zone de défaillance du domaine d'usage D. La nouvelle fonctionnalité, qui n'a pas été prise pendant la phase d'apprentissage, fait partie du fonctionnement normal du composant logiciel testé. Il est possible, lors de la détection de nouvelles fonctionnalités, de déclencher une nouvelle phase d'apprentissage visant à enrichir les modèles de fonctionnement de référence du composant logiciel. Des méthodes rapides dites 'active learning' peuvent être mise en oeuvre pour cette mise à jour.

Dans certains modes de réalisation, l'unité de test 103 peut être configurée pour déterminer que la caractéristique de fonctionnement du composant logiciel est une fonctionnalité donnée (connue) du composant logiciel si le point de fonctionnement représentant les données de mise en production d'entrée et les données de mise en production de sortie appartient à la partition de données associée à la fonctionnalité donnée.

En référence à la figure 2, un procédé de test d'un composant logiciel est illustré, selon certains modes de réalisation de l'invention.

Dans certains modes de réalisation, le composant logiciel testé peut être un logiciel standard ou un logiciel libre, implémenté dans un système hôte 1000. Un logiciel standard peut être, à titre d'exemple et sans limitation, un logiciel standard choisi parmi un groupe comprenant des composants d'extension (par exemples les plugins, les codées, et les pilotes), des bibliothèques logicielles, des exécutables, des fichiers, des composants de données (par exemples des bases de données et des ontologies), et des éléments de configuration (tels que les paramètres, les scripts, et les fichiers de commandes).

Dans certains modes de réalisation, le composant logiciel peut être testé afin de vérifier que le comportement du composant logiciel est toujours le même après des mises à jour logicielles, ou de vérifier le comportement d'une nouvelle fonctionnalité à implémenter, de s'assurer que l'ajout de nouvelles fonctionnalités n'a pas introduit de régression sur les anciennes, ou de s'assurer que le changement de serveur ou de base de données n'a pas impacté le service.

Le procédé peut comprendre deux phases : une phase d'apprentissage qui comprend les étapes 201 à 205, et une phase de mise en production qui comprend les étapes 207 et 209.

La phase d'apprentissage correspond à une phase de détermination d'un ou plusieurs modèles de fonctionnement de référence du composant logiciel testé, pendant une période de fonctionnement *hors ligne,* à partir d'une ou plusieurs campagnes de test. Une campagne de test comprend un ensemble de cas de tests informatiques à exécuter sur une période de temps donnée pour répondre à un besoin particulier. Une campagne de test peut être une campagne de test de validation visant à vérifier que le composant logiciel a bien le comportement attendu, ou une campagne de régression visant à vérifier que l'implémentation de nouvelles fonctionnalités n'a pas impacté le comportement des fonctionnalités déjà présentes dans le composant, ou bien une campagne de test vitaux visant à s'assurer que l'intégration du composant logiciel dans le système hôte 1000 n'a pas engendré de régression critique sur l'application.

Un cas de test informatique est un test qui sert à vérifier si certaines données de test d'entrée pour une exécution donnée produisent le résultat attendu.

La phase de mise en production correspond à une phase de caractérisation du fonctionnement du composant testé pendant une période opérationnelle ou fonctionnelle en comparant le fonctionnement *en ligne* du composant logiciel aux modèles de fonctionnement de référence déterminés pendant la phase d'apprentissage. La caractérisation du fonctionnement du composant logiciel testé permet de détecter toutes anomalies et nouvelles fonctionnalités du composant logiciel.

A l'étape 201, un ou plusieurs cas de tests informatiques peuvent être déterminés pour au moins une campagne de test Cᵢ afin de tester un composant logiciel. Chaque campagne de test Cᵢ est associée à un ensemble de données de test d'entrée notées Eⁱ₁, Eⁱ₂,...,Eⁱ_{N}, l'ensemble de données de test d'entrée comprenant N valeurs de test d'entrée et l'indice i variant de 1 au nombre total Nₜₒₜ de campagnes de test considérées, au moins égal à 1.

Selon certains modes de réalisation, les cas de tests informatiques peuvent être déterminés ou définis en fonction de l'application du système hôte implémentant le composant logiciel testé.

A l'étape 203, les cas de tests informatiques de chaque campagne de test Cᵢ peuvent être exécutés pendant une période de fonctionnement du composant logiciel. La période de fonctionnement peut correspondre à l'ensemble des périodes de temps données nécessaires pour exécuter les cas de tests de chacune des campagnes de test considérées. L'exécution des cas de tests informatiques de chaque campagne de test Cᵢ fournit des données de test de sortie notées Sⁱ₁, Sⁱ₂,...,Sⁱ_{N} associées à chaque campagne de tests Cᵢ.

A l'étape 205, un modèle de fonctionnement de référence RTEMⁱ du composant logiciel et une partition de données Pⁱ peuvent être déterminés à partir des données de test d'entrée E¹₁, E¹₂,...,Eⁱ_{N} et des données de test de sortie Sⁱ₁, Sⁱ₂,...,Sⁱ_{N} associées à chaque campagne de test Cᵢ, pour i variant de 1 à Nₜₒₜ.

Plus précisément, un modèle de fonctionnement de référence RTEMⁱ du composant logiciel peut être déterminé, en association avec chaque campagne de test Cᵢ, en appliquant un algorithme d'apprentissage machine aux données de test d'entrée Eⁱ₁, Eⁱ₂,...,Eⁱ_{N} et aux données de test de sortie Sⁱ₁, Sⁱ₂,...,Sⁱ_{N} associées à la campagne de test Cᵢ. Les données de test d'entrée Eⁱ₁, E¹₂,...,Eⁱ_{N} et les données de test de sortie Sⁱ₁, Sⁱ₂,...,Sⁱ_{N} sont données comme couples à l'algorithme d'apprentissage machine qui va converger vers un état où ces paramètres internes permettent de reproduire et généraliser ces couples, en prenant les précautions de rigueur pour éviter les phénomènes d'under-fitting et over-fitting.

Selon certains modes de réalisation, l'algorithme d'apprentissage machine peut être un algorithme d'apprentissage machine choisi dans un groupe comprenant des algorithmes d'apprentissage machine de type clustering non-supervisés.

Dans un mode de réalisation préféré, l'algorithme d'apprentissage machine peut être un réseau de neurones profond.

Dans certains modes de réalisation, les données de test d'entrée Eⁱ₁, Eⁱ₂,...,Eⁱ_{N} et les données de test de sortie Sⁱ₁, Sⁱ₂,...,Sⁱ_{N} associées à chaque campagne de test Cᵢ, pour i variant de 1 à Nₜₒₜ, peuvent être représentées par des points de fonctionnement dans un espace multidimensionnel et peuvent être séparées ou groupées en différentes partitions (aussi nommées 'groupements' ou `clusters' en anglais). Une partition de données P' peut être déterminée en association avec chaque campagne de test Cᵢ en appliquant un algorithme de partitionnement de données (aussi nommé 'algorithme de groupement de données' ou encore `clustering algorithm' en anglais) à partir des données de test d'entrée Eⁱ₁, Eⁱ₂,...,Eⁱ_{N} et des données de test de sortie Sⁱ₁, Sⁱ₂,...,Sⁱ_{N} associées à chaque campagne de test Cᵢ. Chaque partition de données P' et chaque modèle de fonctionnement de référence RTEMⁱ déterminés pour chaque campagne de test Cᵢ correspondent à une fonctionnalité donnée du composant logiciel. L'ensemble des partitions de données P' associées aux campagnes de test Cᵢ correspondent à un domaine d'usage D du composant logiciel aussi nommé domaine de qualification. Le domaine d'usage D représente le périmètre normal de fonctionnement du composant logiciel.

Dans certains modes de réalisation, le domaine d'usage D peut comprendre au moins une zone de défaillance.

Selon certains modes de réalisation, l'algorithme de partitionnement de données peut être choisi dans un groupe comprenant, sans limitation, l'algorithme des k-moyennes, des algorithmes de regroupement hiérarchique, et des algorithmes de maximisation de l'espérance.

Selon certains modes de réalisation, le nombre total de campagnes de test peut être choisi pour produire autant de modèles de fonctionnement de référence que nécessaires pour couvrir toutes les applications du composant logiciel testé. Les modèles de fonctionnement de référence constituent le comportement de référence désiré.

A l'étape 207, le composant logiciel peut être mis en production en utilisant des données de mise en production d'entrée, ce qui fournit des données de mise en production de sortie. La mise en production du composant logiciel consiste à fonctionner le composant logiciel en lui fournissant en entrée des données de mise en production d'entrée. Les données de mise en production d'entrée et les données de mise en production de sortie peuvent être représentées par un point de fonctionnement du composant logiciel.

A l'étape 209, une caractéristique de fonctionnement du composant logiciel peut être déterminée à partir des modèles fonctionnement de référence RTEMⁱ, pour i variant de 1 à Nₜₒₜ en fonction d'une comparaison entre les données de mise en production d'entrée et de sortie et les données des partitions de données Pⁱ associées aux campagnes de test Cᵢ. La comparaison du fonctionnement du composant logiciel dans le système en production par rapport aux modèles de fonctionnement de référence basés sur l'apprentissage permet, en production, de caractériser le fonctionnement du composant logiciel et de détecter tout fonctionnement nouveau ou anormal.

Selon certains modes de réalisation, une caractéristique de fonctionnement du composant logiciel peut être déterminée en en déterminant si le point de fonctionnement représentant les données de mise en production d'entrée et les données de mise en production de sortie appartient au domaine d'usage D et à une partition de donnée P^{j} pour j pouvant varier entre 1 et Nₜₒₜ.

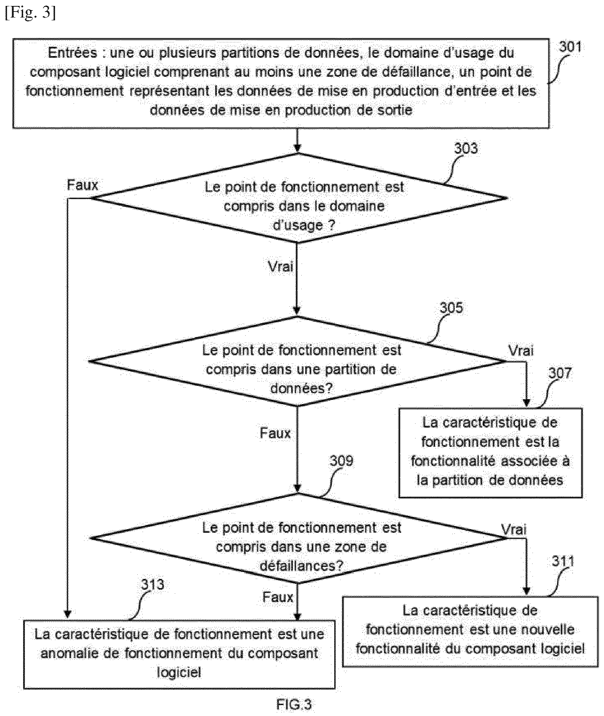

En référence à la figure 3, un organigramme illustrant l'étape de détermination d'une caractéristique du composant logiciel à l'étape 209 est présenté, selon certains modes de réalisation.

A l'étape 301, les partitions de données P', le domaine d'usage D comprenant au moins une zone de défaillance, le point de fonctionnement représentant les données de mise en production d'entrée et de sortie, peuvent être reçues.

A l'étape 303, il peut être déterminé si le point de fonctionnement est compris dans le domaine d'usage D.

S'il est déterminé à l'étape 303 que le point de fonctionnement n'appartient pas au domaine d'usage D, une anomalie de fonctionnement du composant logiciel peut être déterminée comme caractéristique de fonctionnement à l'étape 313.

S'il est déterminé à l'étape 303 que le point de fonctionnement appartient au domaine d'usage D, il peut être déterminé à l'étape 305 si le point de fonctionnement est compris dans une partition de données.

S'il est déterminé à l'étape 305 que le point de fonctionnement est compris dans une partition de donnée P^{j} pour j variant entre 1 et Nₜₒₜ, la fonctionnalité donnée (connue) associée à la partition P^{j} à laquelle appartient le point de fonctionnement est déterminée comme caractéristique de fonctionnement à l'étape 307.

S'il est déterminé à l'étape 305 que le point de fonctionnement n'appartient à aucune partition de données Pⁱ pour i allant de 1 à Nₜₒₜ, alors l'étape 309 peut être exécutée pour déterminer si le point de fonctionnement est compris dans une zone de défaillance du domaine d'usage. S'il est déterminé à l'étape 309 que le point de fonctionnement est compris dans une zone de défaillance, alors une anomalie de fonctionnement du composant logiciel peut être déterminée comme caractéristique de fonctionnement à l'étape 313. S'il est déterminé à l'étape 309 que le point de fonctionnement n'appartient à aucune zone de défaillance, une nouvelle fonctionnalité du composant logiciel peut être déterminée comme caractéristique de fonctionnement à l'étape 311.

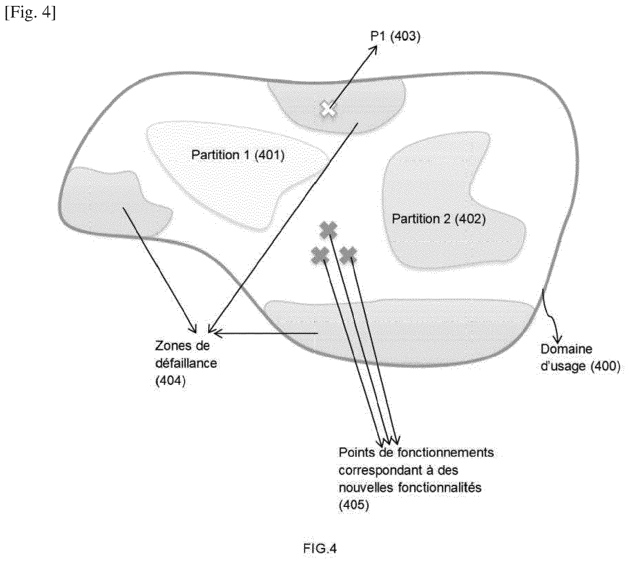

En référence à la figure 4, un exemple de représentation de points de fonctionnement dans un domaine d'usage 400 est illustré, selon certains modes de réalisation de l'invention. Le domaine d'usage définit le périmètre des fonctionnements du composant logiciel.

Comme illustré dans la figure 4, le domaine d'usage 400 comprend trois zones de défaillances 404, une première partition 401 (aussi nommée Partition 1), et une second partition 402 (aussi nommée Partition 2). Le point de fonctionnement P1 403 appartient à une zone de défaillance et correspond à la détection d'une anomalie de fonctionnement. Les points de fonctionnement 405 sont compris dans le domaine d'usage D mais à l'extérieur des première et seconde partitions 401 et 402. Ces points de fonctionnement correspondent à la détection d'une nouvelle fonctionnalité du composant logiciel qui n'a pas été considérée pendant la phase d'apprentissage.

L'invention fournit par ailleurs un produit programme d'ordinateur comprenant des instructions de code permettant d'effectuer les étapes du procédé lorsque ledit programme est exécuté sur un ordinateur.

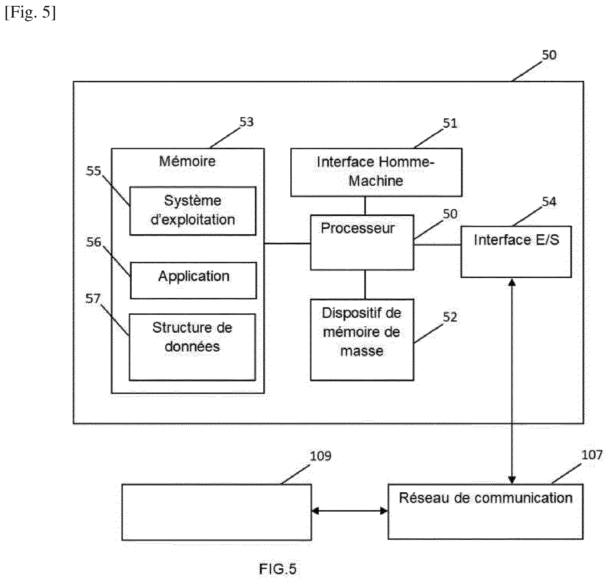

Le dispositif 100, le procédé et le produit programme d'ordinateur de test de composant logiciel selon les différents modes de réalisation de l'invention peuvent être mis en oeuvre sur un ou plusieurs dispositifs ou systèmes informatiques, désignés collectivement sous le nom d'ordinateur, tel que l'ordinateur 50 illustré à la Figure 5. L'ordinateur 50 peut inclure un processeur 50, une mémoire 53, une base de données 52 faisant partie d'un dispositif de mémoire de stockage de masse, une interface d'entrée/sortie (I/O) 54 et une interface Homme-Machine (IHM) 51. L'ordinateur 50 peut communiquer avec le système 109 via un réseau de communication 107 et avec le réseau de communication 107 via l'interface d'entrée/sortie (E/S) 54. Les ressources externes peuvent inclure, mais sans s'y limiter, des serveurs, des bases de données, des dispositifs de stockage de masse, des dispositifs périphériques, des services de réseau en nuage (cloud), ou toute autre ressource informatique appropriée qui peut être utilisée avec l'ordinateur 50.

Le processeur 50 peut inclure un ou plusieurs dispositifs sélectionnés : des microprocesseurs, des microcontrôleurs, des processeurs de signal numérique, des micro-ordinateurs, des unités centrales de traitement, des réseaux de portes programmables, des dispositifs logiques programmables, des machines à état défini, des circuits logiques, des circuits analogiques, des circuits numériques, ou tout autre dispositif servant à manipuler des signaux (analogues ou numériques) basé sur des instructions de fonctionnement enregistrées dans la mémoire 53. La mémoire 53 peut inclure un seul dispositif ou une pluralité de dispositifs de mémoire, notamment mais sans s'y limiter, la mémoire à lecture seule (read-only memory (ROM), la mémoire à accès aléatoire (random access memory (RAM), la mémoire volatile, la mémoire non volatile, la mémoire vive statique (SRAM), la mémoire dynamique à accès aléatoire (DRAM), la mémoire flash, l'antémémoire (cache memory)) ou tout autre dispositif capable de stocker des informations. Le dispositif de mémoire de masse 52 peut inclure des dispositifs de stockage de données tels qu'un disque dur, un disque optique, un dérouleur de bande magnétique, un circuit à l'état solide volatile ou non volatile ou tout autre dispositif capable de stocker des informations. Une base de données peut résider sur le dispositif de stockage de mémoire de masse 52, et peut être utilisée pour collecter et organiser les données utilisées par les différents systèmes et modules décrits dans les présentes.

Le processeur 50 peut fonctionner sous le contrôle d'un système d'exploitation 55 qui réside dans la mémoire 53. Le système d'exploitation 55 peut gérer les ressources informatiques de telle façon que le code de programme de l'ordinateur, intégré sous forme d'une ou de plusieurs applications logicielles, telles que l'application 56 qui réside dans la mémoire 53, puisse disposer d'instructions exécutées par le processeur 50. Dans un autre mode de réalisation, le processeur 50 peut exécuter directement l'application 56.

En général les routines exécutées pour mettre en oeuvre les modes de réalisation de l'invention, qu'elles soient mises en oeuvre dans le cadre d'un système d'exploitation ou d'une application spécifique, d'un composant, d'un programme, d'un objet, d'un module ou d'une séquence d'instructions, ou même d'un sous-ensemble de ceux-là, peuvent être désignées dans les présentes comme "code de programme informatique" ou simplement "code de programme ». Le code de programme comprend typiquement des instructions lisibles par ordinateur qui résident à divers moments dans des dispositifs divers de mémoire et de stockage dans un ordinateur et qui, lorsqu'elles sont lues et exécutées par un ou plusieurs processeurs dans un ordinateur, amènent l'ordinateur à effectuer les opérations nécessaires pour exécuter les opérations et/ou les éléments propres aux aspects variés des modes de réalisation de l'invention. Les instructions d'un programme, lisibles par ordinateur, pour réaliser les opérations des modes de réalisation de l'invention peuvent être, par exemple, le langage d'assemblage, ou encore un code source ou un code objet écrit en combinaison avec un ou plusieurs langages de programmation.

## Revendications

1. Procédé pour tester un composant logiciel implémenté dans un système hôte à partir d'une ou plusieurs campagnes de test, une campagne de test comprenant des cas de tests informatiques et étant associée à des données de test d'entrée, le procédé étant **caractérisé en ce qu'**il comprend les étapes consistant à :
- exécuter (203) les cas de tests informatiques de chaque campagne de tests pendant une période de fonctionnement dudit composant logiciel, ce qui fournit des données de test de sortie associées à chaque campagne de tests;
- déterminer (205) un modèle de fonctionnement de référence et une partition de données à partir des données de test d'entrée et de sortie associées à chaque campagne de test, un modèle de fonctionnement de référence étant déterminé en appliquant un algorithme d'apprentissage machine auxdites données de test d'entrée et de sortie, une partition de données étant déterminée en appliquant un algorithme de partitionnement de données auxdites données de test d'entrée et de sortie;
- fonctionner (207) ledit composant logiciel en utilisant des données de mise en production d'entrée, ce qui fournit des données de mise en production de sortie;
- déterminer (209) une caractéristique de fonctionnement dudit composant logiciel à partir des modèles de fonctionnement de référence en fonction d'une comparaison entre les données de mise en production d'entrée et de sortie et les données des partitions de données associées à ladite une ou plusieurs campagnes de test,
le procédé étant en outre **caractérisé en ce que** l'ensemble des partitions de données associées à ladite une ou plusieurs campagnes de test correspond à un domaine d'usage dudit composant logiciel, les données de mise en production d'entrée et les données de mise en production de sortie étant représentées par un point de fonctionnement dudit composant logiciel, ladite étape (209) de détermination d'une caractéristique de fonctionnement dudit composant logiciel comprenant la détermination si ledit point de fonctionnement appartient audit domaine d'usage et à une partition de donnée.

2. Procédé pour tester un composant logiciel selon la revendication 1, **caractérisé en ce que** ledit algorithme d'apprentissage machine est un algorithme d'apprentissage machine choisi dans un groupe comprenant des algorithmes d'apprentissage machine de type clustering non-supervisés.

3. Procédé pour tester un composant logiciel selon la revendication 2, **caractérisé en ce que** ledit algorithme d'apprentissage machine est un réseau de neurones profond.

4. Procédé pour tester un composant logiciel selon la revendication 1, **caractérisé en ce que** ledit algorithme de partitionnement de données est choisi dans un groupe comprenant l'algorithme des k-moyennes, des algorithmes de regroupement hiérarchique, et des algorithmes de maximisation de l'espérance.

5. Procédé pour tester un composant logiciel selon la revendication 1, **caractérisé en ce que** ledit domaine d'usage comprend au moins une zone de défaillance, ladite caractéristique de fonctionnement étant une anomalie de fonctionnement dudit composant logiciel si ledit point de fonctionnement est compris dans ladite au moins une zone de défaillance ou si ledit point de fonctionnement n'appartient pas audit domaine d'usage.

6. Procédé pour tester un composant logiciel selon la revendication 1, **caractérisé en ce que** ladite caractéristique de fonctionnement est une nouvelle fonctionnalité du composant logiciel si ledit point de fonctionnement appartient audit domaine d'usage et n'appartient à aucune desdites une ou plusieurs partitions de données et à aucune de ladite au moins une zone de défaillance.

7. Procédé pour tester un composant logiciel selon la revendication 1, **caractérisé en ce que** chaque partition de données et chaque modèle de fonctionnement associés à chaque campagne de test correspond à une fonctionnalité donnée dudit composant logiciel, ladite caractéristique de fonctionnement étant ladite fonctionnalité donnée si ledit point de fonctionnement appartient à la partition de données correspondant à ladite fonctionnalité.

8. Procédé pour tester un composant logiciel selon la revendication 1, **caractérisé en ce que** ledit composant logiciel est un logiciel libre ou un logiciel standard.

9. Procédé pour tester un composant logiciel selon la revendication 1, **caractérisé en ce que** lesdits cas de tests informatiques sont définis en fonction d'une application dudit système hôte.

10. Dispositif (100) pour tester un composant logiciel implémenté dans un système hôte (1000) à partir d'une ou plusieurs campagnes de tests, une campagne de test comprenant des cas de tests informatiques et étant associée à des données de test d'entrée, le dispositif étant **caractérisé en ce qu'**il comprend :
- une unité de traitement (101) configurée pour :
• exécuter les cas de tests informatiques de chaque campagne de tests pendant une période de fonctionnement dudit composant logiciel, ce qui fournit des données de test de sortie associées à chaque campagne de tests, et
• déterminer un modèle de fonctionnement de référence et une partition de données à partir des données de test d'entrée et de sortie associées à chaque campagne de test, un modèle de fonctionnement de référence étant déterminé en appliquant un algorithme d'apprentissage machine auxdites données de test d'entrée et de sortie, une partition de données étant déterminée en appliquant un algorithme de partitionnement de données auxdites données de test d'entrée et de sortie;
- une unité de test (103) configurée pour :
• fonctionner ledit composant logiciel en utilisant des données de mise en production d'entrée, ce qui fournit des données de mise en production de sortie;
• déterminer une caractéristique de fonctionnement dudit composant logiciel à partir des modèles de fonctionnement de référence en fonction d'une comparaison entre les données de mise en production d'entrée et de sortie et les données des partitions de données associées à ladite une ou plusieurs campagnes de test,
l'ensemble des partitions de données associées à ladite une ou plusieurs campagnes de test correspondant à un domaine d'usage dudit composant logiciel, les données de mise en production d'entrée et les données de mise en production de sortie étant représentées par un point de fonctionnement dudit composant logiciel, ladite unité de test étant en outre configurée pour déterminer si ledit point de fonctionnement appartient audit domaine d'usage et à une partition de donnée.

## Patentansprüche

1. Verfahren zum Testen einer Softwarekomponente, die in einem Hostsystem implementiert ist, anhand einer oder mehrerer Testkampagnen, wobei eine Testkampagne Computertestfälle umfasst und mit Eingabetestdaten verbunden ist, wobei das Verfahren **dadurch gekennzeichnet ist, dass** es die folgenden Schritte umfasst:
- Ausführen (203) der Computertestfälle jeder Testkampagne während einer Betriebszeit der Softwarekomponente, wodurch mit jeder Testkampagne verbundene Ausgabetestdaten bereitgestellt werden;
- Bestimmen (205) eines Referenzbetriebsmodells und einer Datenpartition anhand der Eingabe- und Ausgabetestdaten, die mit jeder Testkampagne verbunden sind, wobei ein Referenzbetriebsmodell durch Anwenden eines maschinellen Lernalgorithmus auf die Eingabe- und Ausgabetestdaten bestimmt wird, wobei eine Datenpartition durch Anwenden eines Datenpartitionierungsalgorithmus auf die Eingabe- und Ausgabetestdaten bestimmt wird;
- Betreiben (207) der Softwarekomponente unter Verwendung von Eingabe-Produktionsstartdaten, wodurch Ausgabe-Produktionsstartdaten bereitgestellt werden;
- Bestimmen (209) eines Betriebsmerkmals der Softwarekomponente anhand der Referenzbetriebsmodelle angesichts eines Vergleichs zwischen den Eingabe- und Ausgabe-Produktionsstartdaten und den Datenpartitionsdaten, die mit der einen oder den mehreren Testkampagnen verbunden sind,
wobei das Verfahren ferner **dadurch gekennzeichnet ist, dass** die Gesamtheit der Datenpartitionen, die mit der einen oder den mehreren Testkampagnen verbunden sind, einem Nutzungsbereich der Softwarekomponente entspricht, wobei die Eingabe-Produktionsstartdaten und die Ausgabe-Produktionsstartdaten durch einen Betriebspunkt der Softwarekomponente dargestellt werden, wobei der Schritt (209) des Bestimmens eines Betriebsmerkmals der Softwarekomponente das Bestimmen umfasst, ob der Betriebspunkt zu dem Nutzungsbereich und zu einer Datenpartition gehört.

2. Verfahren zum Testen einer Softwarekomponente nach Anspruch 1, **dadurch gekennzeichnet, dass** der maschinelle Lernalgorithmus ein maschineller Lernalgorithmus ist, der aus einer Gruppe ausgewählt ist, die maschinelle Lernalgorithmen vom Typ unbeaufsichtigte Clustering-Algorithmen umfasst.

3. Verfahren zum Testen einer Softwarekomponente nach Anspruch 2, **dadurch gekennzeichnet, dass** der maschinelle Lernalgorithmus ein tiefes neuronales Netz ist.

4. Verfahren zum Testen einer Softwarekomponente nach Anspruch 1, **dadurch gekennzeichnet, dass** der Datenpartitionierungsalgorithmus aus einer Gruppe ausgewählt ist, die den k-Mittelwert-Algorithmus, hierarchische Clustering-Algorithmen und Erwartungsmaximierungsalgorithmen umfasst.

5. Verfahren zum Testen einer Softwarekomponente nach Anspruch 1, **dadurch gekennzeichnet, dass** der Nutzungsbereich mindestens einen Ausfallbereich umfasst, wobei das Betriebsmerkmal eine Betriebsanomalie der Softwarekomponente ist, wenn der Betriebspunkt in dem mindestens einen Ausfallbereich enthalten ist oder wenn der Betriebspunkt nicht zu dem Nutzungsbereich gehört.

6. Verfahren zum Testen einer Softwarekomponente nach Anspruch 1, **dadurch gekennzeichnet, dass** das Betriebsmerkmal eine neue Funktionalität der Softwarekomponente ist, wenn der Betriebspunkt zu dem Nutzungsbereich gehört und zu keiner der einen oder der mehreren Datenpartitionen und zu keinem des mindestens einen Ausfallbereichs gehört.

7. Verfahren zum Testen einer Softwarekomponente nach Anspruch 1, **dadurch gekennzeichnet, dass** jede Datenpartition und jedes Betriebsmodell, die mit jeder Testkampagne verbunden sind, einer gegebenen Funktionalität der Softwarekomponente entspricht, wobei das Betriebsmerkmal die gegebene Funktionalität ist, wenn der Betriebspunkt zu der Datenpartition gehört, die der Funktionalität entspricht.

8. Verfahren zum Testen einer Softwarekomponente nach Anspruch 1, **dadurch gekennzeichnet, dass** die Softwarekomponente freie Software oder Standardsoftware ist.

9. Verfahren zum Testen einer Softwarekomponente nach Anspruch 1, **dadurch gekennzeichnet, dass** die Computertestfälle entsprechend einer Anwendung des Hostsystems definiert werden.

10. Vorrichtung (100) zum Testen einer in einem Hostsystem (1000) implementierten Softwarekomponente anhand einer oder mehrerer Testkampagnen, wobei eine Testkampagne Computertestfälle umfasst und mit Eingabetestdaten verbunden ist, wobei die Vorrichtung **dadurch gekennzeichnet ist, dass** sie Folgendes umfasst:
- eine Verarbeitungseinheit (101), die zu Folgendem konfiguriert ist:
• Ausführen der Computertestfälle jeder Testkampagne während einer Betriebszeit der Softwarekomponente, wodurch mit jeder Testkampagne verbundene Ausgabetestdaten bereitgestellt werden, und
• Bestimmen eines Referenzbetriebsmodells und einer Datenpartition anhand der jeder Testkampagne zugeordneten Eingabe- und Ausgabetestdaten, wobei ein Referenzbetriebsmodell durch Anwendung eines maschinellen Lernalgorithmus auf die Eingabe- und Ausgabetestdaten bestimmt wird, wobei eine Datenpartition durch Anwendung eines Datenpartitionierungsalgorithmus auf die Eingabe- und Ausgabetestdaten bestimmt wird;
- eine Testeinheit (103), die zu Folgendem konfiguriert ist:
• Betreiben der Softwarekomponente unter Verwendung von Eingabe-Produktionsstartdaten, wodurch Ausgabe-Produktionsstartdaten bereitgestellt werden;
• Bestimmen eines Betriebsmerkmals der Softwarekomponente anhand der Referenzbetriebsmodelle angesichts eines Vergleichs zwischen den Eingabe- und Ausgabe-Produktionsstartdaten und den Datenpartitionsdaten, die mit der einen oder den mehreren Testkampagnen verbunden sind,
wobei die Gesamtheit der Datenpartitionen, die mit der einen oder den mehreren Testkampagnen verbunden sind, einem Nutzungsbereich der Softwarekomponente entspricht, wobei die Eingabe-Produktionsstartdaten und die Ausgabe-Produktionsstartdaten durch einen Betriebspunkt der Softwarekomponente dargestellt werden, wobei die Testeinheit ferner so konfiguriert ist, dass sie bestimmt, ob der Betriebspunkt zu dem Nutzungsbereich und zu einer Datenpartition gehört.

## Claims

1. A method for testing a software component implemented in a host system based on one or more test campaigns, a test campaign comprising computer test cases and being associated with input test data, the method being **characterised in that** it comprises the steps of:
- executing (203) the computer test cases of each test campaign for an operating time period of said software component, which provides output test data associated with each test campaign;
- determining (205) a reference operating model and a data partition based on the input and output test data associated with each test campaign, a reference operating model being determined by applying a machine learning algorithm to said input and output test data, a data partition being determined by applying a data partitioning algorithm to said input and output test data;
- running (207) said software component using input production run data, which provides output production run data;
- determining (209) an operating characteristic of said software component based on the reference operating models according to a comparison between the input and output production run data and the data from the data partitions associated with said one or more test campaigns,
the method being further **characterised in that** the set of data partitions associated with said one or more test campaigns corresponds to a domain of use of said software component, the input production run data and the output production run data being represented by an operating point of said software component, said step (209) of determining an operating characteristic of said software component comprising determining whether said operating point belongs to said domain of use and to a data partition.

2. The method for testing a software component according to claim 1, **characterised in that** said machine learning algorithm is a machine learning algorithm chosen from a group comprising unsupervised clustering machine learning algorithms.

3. The method for testing a software component according to claim 2, **characterised in that** said machine learning algorithm is a deep neural network.

4. The method for testing a software component according to claim 1, **characterised in that** said data partitioning algorithm is chosen from a group comprising the k-means algorithm, hierarchical clustering algorithms and expectation-maximisation algorithms.

5. The method for testing a software component according to claim 1, **characterised in that** said domain of use comprises at least one failure region, said operating characteristic being an operating anomaly of said software component if said operating point is within said at least one failure region or if said operating point does not belong to said domain of use.

6. The method for testing a software component according to claim 1, **characterised in that** said operating characteristic is a new functionality of the software component if said operating point belongs to said domain of use and does not belong to any of said one or more data partitions and to any of said at least one failure regions.

7. The method for testing a software component according to claim 1, **characterised in that** each data partition and each operating model associated with each test campaign corresponds to a given functionality of said software component, said operating characteristic being said given functionality if said operating point belongs to the data partition corresponding to said functionality.

8. The method for testing a software component according to claim 1, **characterised in that** said software component is a free software or an off-the-shelf software.

9. The method for testing a software component according to claim 1, **characterised in that** said computer test cases are defined according to an application of said host system.

10. A device (100) for testing a software component implemented in a host system (1000) based on one or more test campaigns, a test campaign comprising computer test cases and being associated with input test data, the device being **characterised in that** it comprises:
- a processing unit (101) configured to:
• execute the computer test cases of each test campaign for an operating time period of said software component, which provides output test data associated with each test campaign; and
• determine a reference operating model and a data partition based on the input and output test data associated with each test campaign, a reference operating model being determined by applying a machine learning algorithm to said input and output test data, a data partition being determined by applying a data partitioning algorithm to said input and output test data;
- a test unit (103) configured to:
• run said software component using input production run data, which provides output production run data;
• determine an operating characteristic of said software component based on the reference operating models according to a comparison between the input and output production run data and the data from the data partitions associated with said one or more test campaigns,
the set of data partitions associated with said one or more test campaigns corresponds to a domain of use of said software component, the input production run data and the output production run data being represented by an operating point of said software component, said test unit being further configured to determine whether said operating point belongs to said domain of use and to a data partition.
